Europäisches Patentamt

European Patent Office

Office européen des brevets

(19)

(11) Veröffentlichungsnummer : **0 116 514 B1**

## (12) EUROPÄISCHE PATENTSCHRIFT

(45) Veröffentlichungstag der Patentschrift :
16.06.87

(21) Anmeldenummer : 84810014.5

(22) Anmeldetag : 09.01.84

(51) Int. Cl.⁴ : **A 01 D 89/00**

(54) **Aufsammelgerät.**

(30) Priorität : **18.01.83 CH 253/83**

(43) Veröffentlichungstag der Anmeldung :
**22.08.84 Patentblatt 84/34**

(45) Bekanntmachung des Hinweises auf die Patenterteilung : **16.06.87 Patentblatt 87/25**

(84) Benannte Vertragsstaaten :
**AT BE DE FR GB IT LU NL SE**

(56) Entgegenhaltungen :
**DE-B- 1 482 831**
**US-A- 3 191 372**

(73) Patentinhaber : **Müller, Paul E. Dipl.-Ing.**
**Herdernstrasse 16**
**CH-8004 Zürich (CH)**

(72) Erfinder : **Müller, Paul E. Dipl.-Ing.**
**Herdernstrasse 16**
**CH-8004 Zürich (CH)**

(74) Vertreter : Feldmann, Clarence Paul et al
c/o Patentanwaltsbüro FELDMANN AG Postfach
Kanalstrasse 17
CH-8152 Glattbrugg (CH)

**Beschreibung**

Die vorliegende Erfindung bezieht sich auf ein Aufsammelgerät für auf dem Boden liegendes Pflanzengut, mit um eine quer zur Fahrtrichtung ausgerichtete, im wesentlichen horizontale Achse rotierenden, den Boden annähernd berührenden Aufnahme-Elementen. Aufsammelgeräte an sich sind bekannt. Sie bilden einen Bestandteil vieler landwirtschaftlicher Geräte wie Ladewagen, Pressen, Häckslern usw. und dienen dazu, am Boden liegendes, gemähtes Erntegut wie Getreide, Gras, Heu usw. aufzunehmen und nach oben zu befördern.

Stand der Technik

Bekannte Aufsammelgeräte besitzen eine mit Federzinken bestückte rotierende Walze. Die Zinken müssen federnd ausgebildet sein, damit sie sich Bodenunebenheiten anpassen können oder bei Auftreffen auf andere Hindernisse wie Steine nicht brechen. Da alle Federzinken eine endliche Lebensdauer haben, wird zwangsläufig bei der Arbeit, früher oder später, eine Zinkenbruch eintreten. Der abgebrochene Zinken wird zusammen mit dem aufgenommen Pflanzengut weitergefördert. Gelangt ein solcher abgebrochener Federzinken zum Beispiel in einen nachgeschalteten Häcksler, hat dies verheerende Folgen und verursacht enorme Reparaturkosten.

Die DE-B-1 482 831 (Van der Lely) schlägt daher als Alternative vor die Aufsammel-Elemente aus Gummi oder Kunststoff herzustellen die mit festen Abstreifer-Elementen zusammenwirken. Auch beim Aufsammelgerät nach der US-A-3 191 372 finden Hilfs-Aufnahmeelemente aus Gummianwendung die dem Haupt-Aufsammelgerät vorgeschaltet sind.

Mit Federzinken versehene Aufsammel-Elemente führen infolge ihrer Federwirkung neben der Drehbewegung eine zusätzliche Relativbewegung aus. Diese zusätzliche Relativbewegung fehlt aber bei den Rädern aus Gummi oder Kunststoff wie sie aus den beiden oben genannten Patentschriften bekannt geworden sind. Bei schwer aufsammelbarem, auf dem Boden liegenden, frisch geschnittenen oder feuchten Pflanzengut besteht daher die Gefahr, dass das Abstreifen des aufgenommenen Pflanzengutes nur unvollständig stattfindet.

Die Erfindung stellt sich zur Aufgabe, ein Aufsammelgerät zu schaffen, das die geschilderten Nachteile vermeidet.

Das erfindungsgemässe Aufsammelgerät behebt diesen Nachteil dadurch, dass im Abgabebereich der rotierenden Aufnahme-Elemente Mittel angebracht sind, die zusätzlich zur der Rotionbewegung eine weitere Relativbewegung zwischen den Aufnahme-Elementen und den Abstreifelementen bewirken.

Die Zeichnung

In der Zeichnung sind einige Ausführungsbeispiele des Erfindungsgegenstandes vereinfacht dargestellt.

Figur 1 zeigt ein Aufsammelgerät teilweise in Seitenansich und teilweise im Schnitt,

Figur 2 eine Ansicht eine Teiles des Gerätes nach Figur 1 von oben,

Figur 3 eine Scheibe eins Aufsammelgerätes mit einer damit in Wirkverbindung stehenden Abstreif-Vorrichtung,

Figur 4 eine Variante zu Figur 3,

Figur 5 einen Teil eines Aufsammelgerätes mit einer Scheibe, deren Zacken mit einer Nabe verbunden sind und von einer Steuerkurve gelenkt werden,

Figur 6 einen Teil eines Aufsammelgerätes mit einer Scheibe, deren Zacken mit einer Nabe verbunden sind und mittels eines Exzenters gesteuert werden,

Figur 7 eine Scheibe eines Aufsammelgerätes mit radialen, biegsamen Armen,

Figur 8 eine Scheibe eines Aufsammelgerätes in Wirkverbindung mit einem federnden Abstreifer,

Figur 9 eine rotierende, zwischen zwei Aufnahme-Elementen angeordnete Abstreifvorrichtung,

Figur 10 ein Aufsammelgerät, etwa wie bei Figur 1, mit einer als Förderelement dienenden Abstreifvorrichtung,

Figur 11 ein diametral geteiltes Aufnahme-Element,

Figur 12 ein in Segmenten aufgeteiltes Aufnahme-Element,

Figur 13 eine Variante zur Vorrichtung nach Figur 7,

Figur 14 eine Variante zur Vorrichtung nach Figur 5,

Figur 15 und 17 ein Aufnahme-Element das ein dazugehördendes Abstreif-Element treibt, von der Seite und im Schnitt,

Figur 16 eine Variante zur Figur 16 und 17.

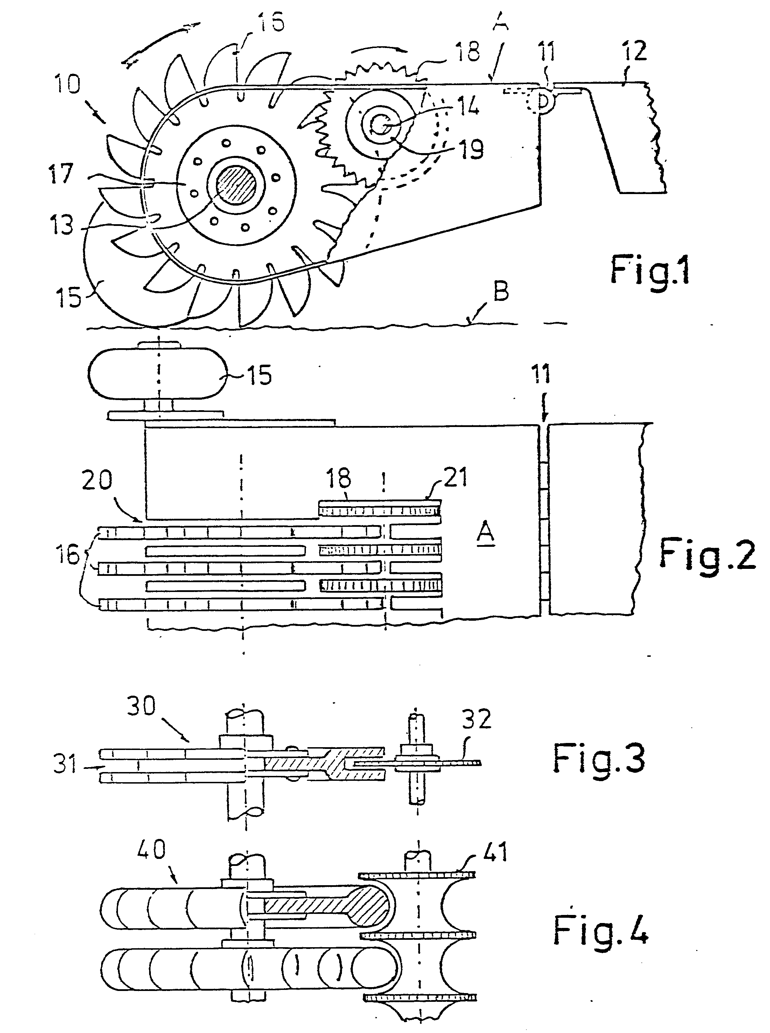

Das in den Figuren 1 und 2 vereinfacht dargestellte Aufsammelgerät 10 ist durch eine gelenkige Verbindung 11 mit einem landwirtschaftlichen Gerät 12 verbunden. Von diesem oder gar von dem das Gerät ziehenden Traktor aus werden die Wellen 13 und 14 auf bekannte, nicht dargestellte Weise in Richtung der Pfeile angetrieben. Das Aufsammelgerät stützt sich mit beidseits angebrachten Tasträdern 15 am Boden B ab. Auf der Welle 13 ist eine Reihe von Aufnahme-Elementen 16 in Abstand voneinander befestigt. Diese haben die Form von verzahnten Rädern, die aus Gummi oder gummielastischem Material hergestellt sind. Sie sind je mittels einer metallischen Nabe 17 auf der Welle 13 befestigt. Auf ähnliche Weise sind ebenfalls aus Gummi oder gummielastischen Werkstoff hergestellte Abstreifräder 18 mittels Naben 19 auf der Welle 14 befestigt.

Sämtliche Räder 16, 18, Naben 17, 19 und Wellen 13, 14, zusammen mit ihrem nicht dargestellten Antriebsmechanismus sind in einem, aussen mit Blech abgedeckten Rahmen untergebracht, aus dem sie durch Schlitze 20, 21 nur teilweise herausragen.

Die Aufsammelräder 16 und die Abstreifräder 18 sind nahe beieinander angeordnet. Sie werden in gleicher Richtung entsprechend den Pfeilen angetrieben. Es ist jedoch von Vorteil, wenn die Welle 14 der Abstreifräder schneller rotiert als die Welle 13 der Aufsammelräder. Der Betrieb geht wie bei bekannten Aufsammelgeräten vor sich. Da sowohl die Aufsammelräder wie die Abstreifräder aus gummielastischem Material hergestellt sind, besteht keine Gefahr, dass abgebrochene Metallteile in das nachgeschaltete Gerät, z. B. einen Häcksler oder ein Gebläse gelangen und dort Zerstörungen verursachen. Die einzelnen Zacken oder Zähne der Aufsammelräder 16 oder Abstreifräder könnten schlimmstenfalls abgerissen werden ; da sie aber aus weichem Material hergestellt sind, wird ein solcher Zahn oder Zacke keinen Schaden verursachen.

Statt die Abstreifräder auf einer durchgehenden Welle 14 anzuordnen und diese für sich anzutreiben, kann der Antrieb der Abstreifräder auch indirekt von den Aufsammelrädern her erfolgen. Die Räder können eine Innenverzahnung aufweisen, in die ein mit dem Abstreifrad verbundenes Ritzel kämmt. Dazu muss allerdings jedes Abstreifrad für sich fliegend gelagert sein, damit sein Ritzel in den Innenzahnkranz eingreifen kann.

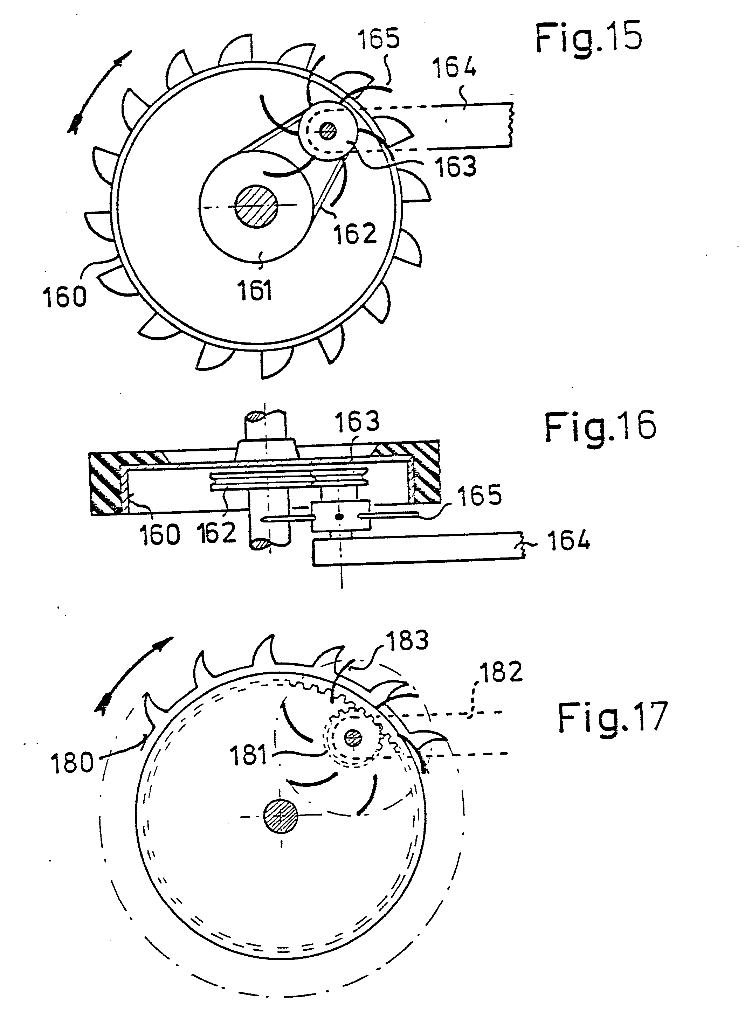

Figur 17 zeigt eine derartige Anordnung der Abstreif-Räder. Jedes Aufsammelrad 180 besteht aus einer einseitig offenen metallischen, innen verzahnten Trommel mit aussen aufvulkanisierten gummielastischen Zacken. Die Innenverzahnung kämmt mit einem Ritzel 181. Das Ritzel ist dazu auf einem Arm 182 drehbar gelagert und treibt ein mit Zinken 183 bestücktes Abstreifrad.

Stattdessen könnte das Abstreifrad auch mit Hilfe eines Keilriemens oder Zahnriemens angetrieben werden, wie dies beispielsweise in den Figuren 15 und 16 dargestellt ist. Im Inneren der einseitig offenen Trommel 160 des Aufsammelrades befindet sich ein Keilriemenrad 161, das über einen Keilriemen 162 das Rad 163 treibt, das am Ende des Armes 164 drehbar gelagert und mit einem Abstreifrad 165 verbunden ist.

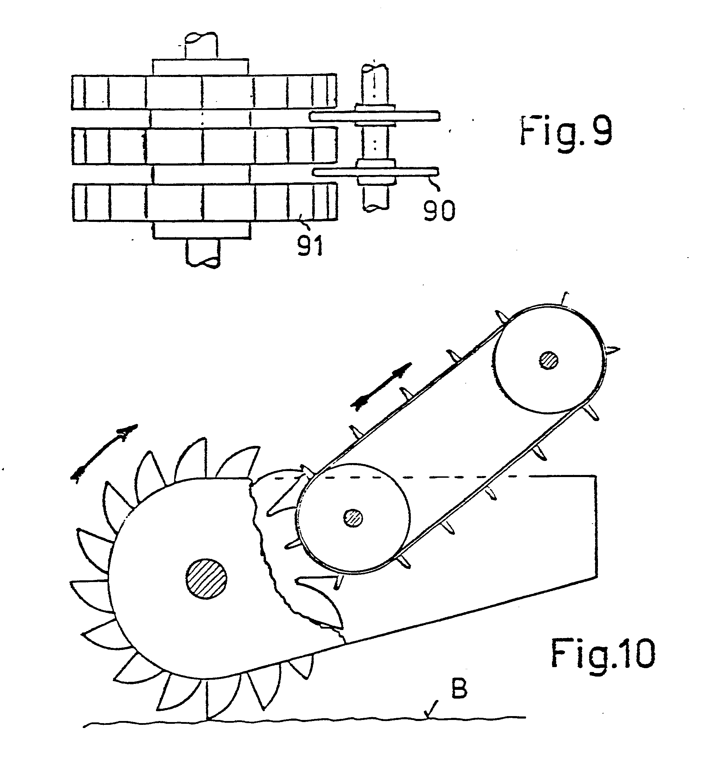

Wie in Figur 2 ersichtlich ist, befinden sich die Aufsammelräder 16 jeweils zwischen zwei Abstreifrädern 18. Zwecks Erreichung eines sicheren Abstreifens kann das Aufsammelrad 30 beziehungsweise dessen Zacken oder Zähne je mit einer Nut 31 versehen sein, in die ein schmales Abstreifrad 32 eingreift, wie dies in Figur 3 dargestellt ist. Natürlich kann das Abstreif-Element 90 auch jeweils zwischen zwei Aufnahme-Elementen 91 angeordnet sein, wie Figur 9 zeigt. Das Aufsammelrad 40 kann auch schaufelartige Zähne oder Zacken haben, wie Figur 4 zeigt. Die Abstreifräder 41 können jeweils die Zacken oder Zähne umgreifen, so dass sie gemeinsam eine Art verzahnte Profilwalze bilden, wie dies in Figur 4 dargestellt ist.

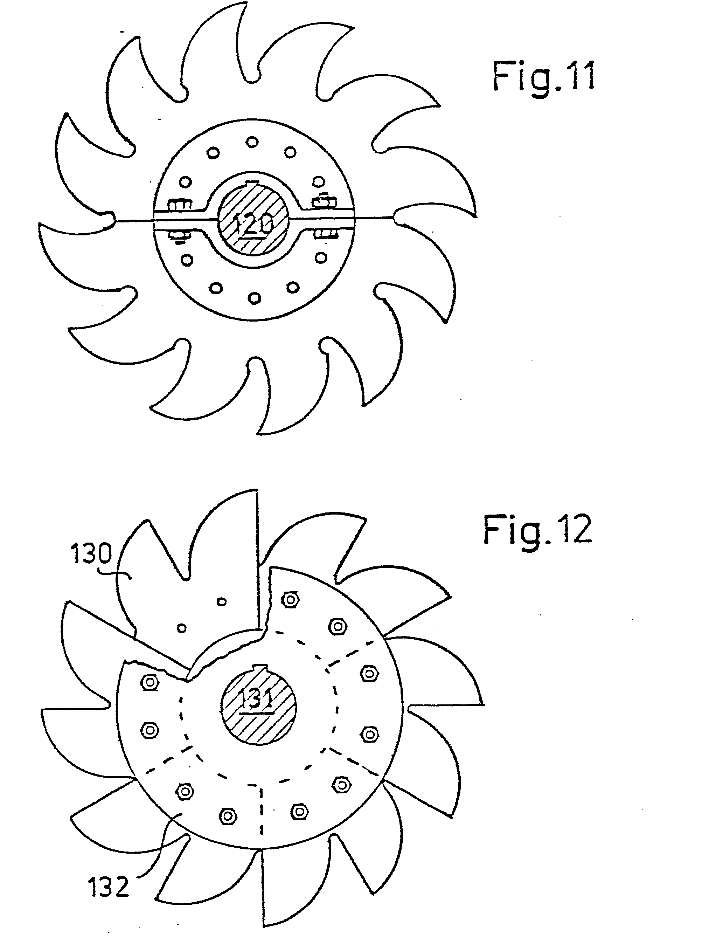

Da die aus gummielastischem Material hergestellten Zacken, Zähne oder Arme der Aufsammelräder dem Verschleiss unterworfen sind, müssen sie nach einer gewissen Betriebsdauer ausgewechselt werden. Entweder wechselt man die ganzen Räder oder nur Segmente derselben aus. Figur 12 zeigt beispielsweise ein diametral geteiltes Aufsammelrad, das sich daher von der Antriebswelle 120 abnehmen und ersetzen lässt.

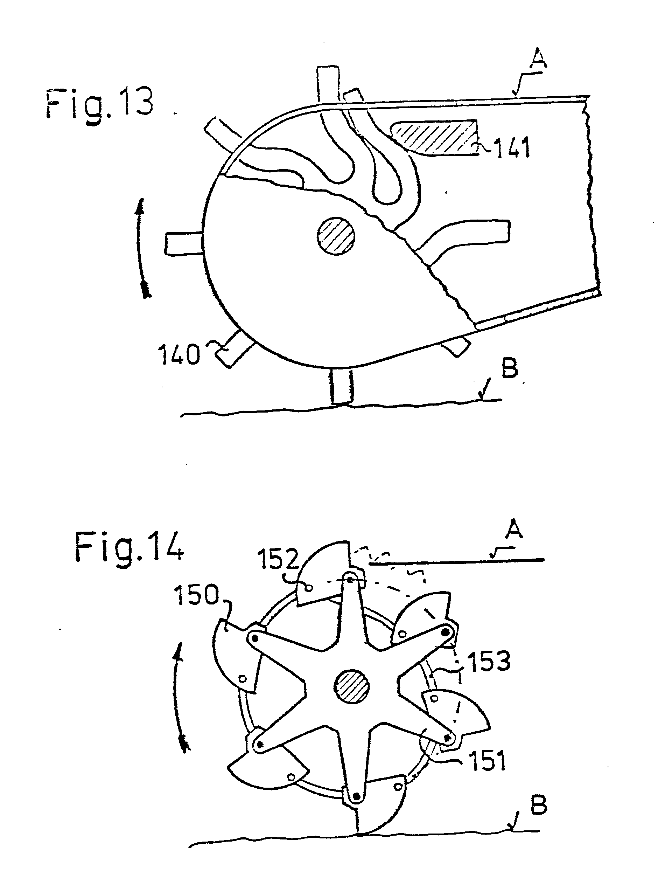

Figur 13 zeigt ein Aufsammelrad, bei dem die gummielastischen Elemente 130 in auswechselbare Segmente unterteilt sind. Die Nabe bleibt dabei auf der Welle 131.

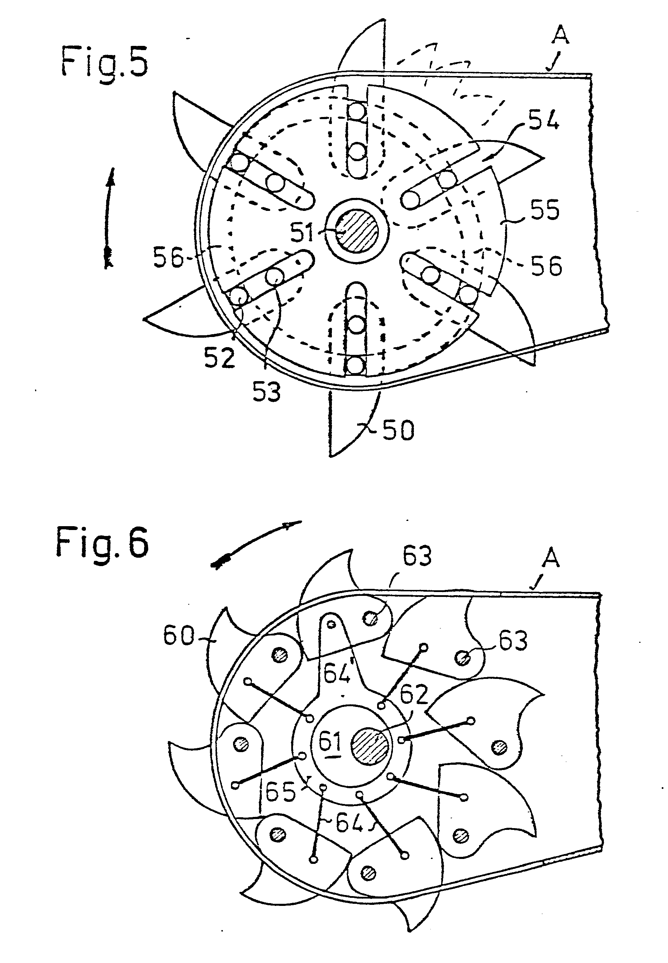

Statt für das Abstreifen des von den Aufsammelrädern geförderten Pflanzengutes eine gesonderte Vorrichtung zu verwenden, kann man die einzelnen Zacken oder Zähne der Aufsammelräder je für sich steuern. Diese Steuerung muss bewirken, dass die einzelnen Zacken oder Zähne, wenn sie das aufgesammelte Pflanzengut bis auf die Abgabefläche A gefördert haben, sich so verhalten, dass sie das Sammelgut selber abstreifen. Als Beispiele solcher Steuerungen sind in Figur 5, 6 und 14 einige Ausführungen vereinfacht dargestellt.

Bei der Ausführung nach Figur 5 haben die einzelnen Zähne 50 je zwei parallel zur Antriebswelle 51 verlaufende Zapfen 52, 53. Diese Zapfen greifen in radiale Schlitze 54 eines mit der Welle 51 verbundenen Antriebsrades 55 ein. Der äussere Zapfen 52 durchsetzt den Zahn und greift zusätzlich in die als Nut 56 ausgebildete Steuerkurve einer festen, nicht mitdrehenden Steuerscheibe ein. Diese Steuerkurve 56 verläuft im Aufsammelbereich kreisförmig und hat im Abgabebereich eine Einbuchtung nach innen. Dies hat zur Folge, dass die Zähne sich im Abgabebereich rasch unter die Abgabefläche A zurückziehen.

Auf ähnliche Weise arbeitet auch die Steuerung nach Figur 6, bei der Zacken 60 durch die nicht mitdrehende Exzenterscheibe 61 zurückgezogen werden. Welle 62 treibt über ein, der Deutlichkeit halber nicht dargestelltes, fest mit ihr verbundenes Antriebsrad die über Zapfen 63 damit verbundenen Zapfen 60. Jede Zacke 60 ist zusätzlich über einen Lenker 64 mit dem um die feste Exzenterscheibe drehbaren Kranz 65 verbunden. Damit der Kranz 65 sich mitdreht, ist ein Lenker 64' starr mit dem Kranz verbunden. Die einzelnen Zacken 60 sind hier so ausgebildet, dass sie bei ihrer Schwenkbewegung um die Zapfen 63 gleitend aneinander anliegen.

Figur 14 zeigt eine Variante zur Ausführung nach Figur 5. Die einzelnen Zacken 150 sind schwenkbar mit den Armen eines Antriebssternes 151 verbunden. Jede Zacke 150 hat einen Zapfen 152, der in eine nicht mitdrehende, als Nut 153 ausgebildete Steuerkurve eingreift. Die Zacken werden dadurch so gesteuert, dass sie im Bereich der Abgabefläche A sich ein wenig nach rückwärts neigen und so die Abgabe erleichtern.

Obwohl dies aus den Figuren 5, 6 und 14 nicht ersichtlich ist, sind die aus dem Gehäuse des Aufsammelgerätes herausragenden Teile der Zacken oder Zähne aus Gummi oder gummielastischem Material hergestellt. Die mit Zapfen oder Drehpunkten versehenen Teile, die sich innerhalb des Gehäuses befinden, sind mit Metallplatten verstärkt oder bestehen ganz aus Metall.

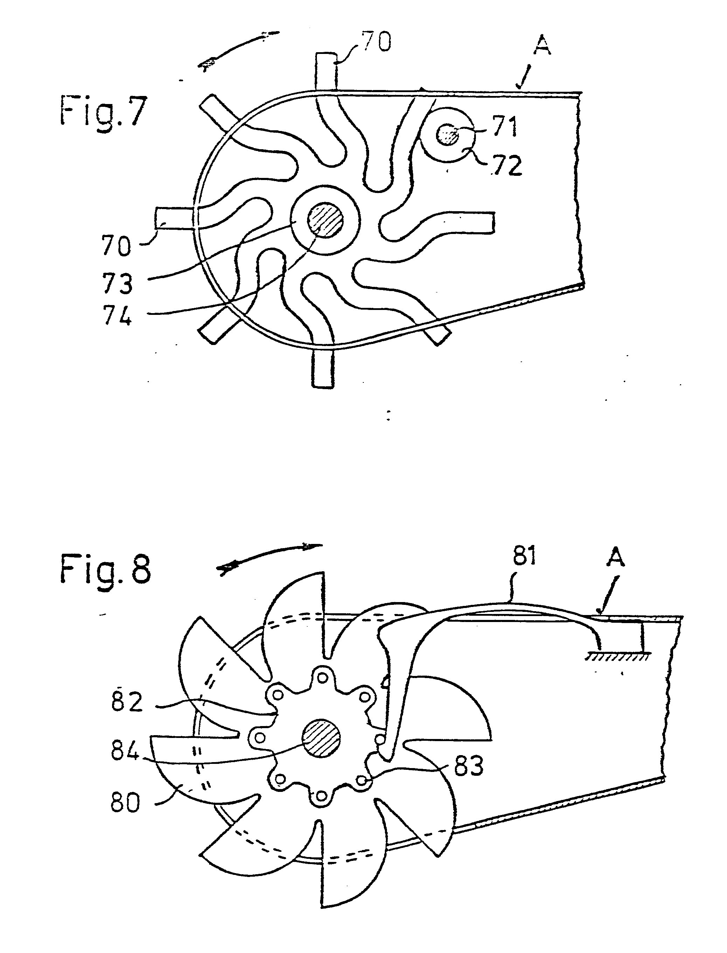

Auch die Ausführung nach Figur 7 benutzt einen festen Anschlag als Abstreifer. Das aus Gummi oder gummielastischem Material hergestellte Aufsammelrad hat gekrümmte Arme 70, die im Abgabebereich, wo das aufgesammelte Pflanzengut auf die Abgabefläche A abgestreift werden soll, zurückgebogen werden, bis sie unter der Fläche A verschwinden. Dazu dient eine Achse 71, auf der einzelne Rollen 72 drehbar befestigt sind. Statt einer festen Achse mit Rollen kann auch eine durchgehende Walze 72 angeordnet sein. Die Aufsammelräder sind mittels metallischen Naben 73 auf der Welle 74 befestigt.

Figur 13 zeigt Variante zur Ausführung nach Figur 7. Sie unterscheidet sich von dieser dadurch, dass die Arme 140 statt entlang einer Rolle oder Walze an einem festen Teil 141 entlang gleiten und von diesem bis unter die Abgabefläche A zurückgebogen werden.

Figur 8 zeigt ein Aufsammelrad 80, das mit einem federnd elastischem Abstreifer 81 in Wirkverbindung steht. In der dargestellten Ausführung sind auf der Nabe 82 Zapfen 83 angebracht, die die Abstreifer 81 im Takt bewegen, so dass sie durch die Zapfen 83 nach unten gezogen werden und dann federnd nach oben schnellen.

Natürlich ist es auch möglich, die Abstreifer 81 durch eine separat angetriebene, parallel zur Welle 84 verlaufende Nockenwelle anzutreiben.

## Patentansprüche

1. Aufsammelgerät für auf dem Boden liegendes Pflanzengut, mit um eine quer zur Fahrtrichtung ausgerichtete, im wesentlichen horizontale Achse rotierenden, den Boden annähernd berührenden Aufnahme-Elementen, in Form von am Umfang verzahnten oder mit radialen Armen versehenen Scheiben aus Gummi oder gummielastischem Material, die mit in einem Abgabebereich angeordneten Abstreif-Elementen in Wirkverbindung stehen, dadurch gekennzeichnet, dass im Abgabebereich der rotierenden Aufnahmeelemente Mittel angebracht sind, die zusätzlich zu der Rotationbewegung eine weitere Relativbewegung zwischen den Aufnahme-Elementen und den Abstreifelementen bewirken.

2. Aufsammelgerät nach Anspruch 1, dadurch gekennzeichnet, dass die eine zusätzliche Relativbewegung bewirkenden Mittel Einzelzähneoder -Zacken (50) sind, die radial verschiebbar mit der Antriebsnabe (55) des Aufnahme-Elementes sind und von einer nicht mitdrehenen Steuerkurve (56) gelenkt werden und mit einem starren Abstreifelement (A) zusammenwirken (Figur 5).

3. Aufsammelgerät nach Anspruch 1, dadurch gekennzeichnet, dass die eine zusätzliche Relativbewegung bewirkenden Mittel Einzelzähneoder Zacken (60) sind, die über Lenker (64) schwenkbar mit der Antriebsnabe (64') des Aufnahme-Elementes verbunden sind, mittels eines Exzenters (61) gesteuert werden und mit einem starren Abstreifelement (A) zusammenwirken (Figur 6).

4. Aufsammelgerät nach Anspruch 1, dadurch gekennzeichnet, dass die eine zusätzliche Relativbewegung bewirkenden Mittel Einzelzähne oder -Zacken (150) sind, die schwenkbar mit der Nabe (151) des Antriebsrades verbunden sind, mittels einer nicht mitdrehenden Steuerkurve (153) gelenkt werden und mit einem starren Abstreifelement (A) zusammenwirken (Figur 14).

5. Aufsammelgerät nach Anspruch 1, dadurch gekennzeichnet, dass die eine zusätzliche Relativbewegung bewirkenden Mittel einen unterhalb eines starren Abstreifelementes (A) fest angeordneten Anschlag (71, 72 ; 141) umfassen und dass das Aufnahme-Element radiale gummielastische Arme (70 ; 140) aufweist, die bei der Rotation des Aufnahme-Elementes vom Anschlag jeweils zurückgebogen werden (Figur 7 und 13).

6. Aufsammelgerät nach Anspruch 1, dadurch gekennzeichnet, dass die eine zusätzliche Relativbewegung bewirkenden Mittel rotierende Abstreif-Scheiben (18, 32, 41, 90) sind, deren Rotationsachse ausserhalb des Rotationskreises der Aufnahme-Elemente liegt (Figur 1-4 und 9).

7. Aufsammelgerät nach Anspruch 1, dadurch gekennzeichnet, dass die eine zusätzliche Relativbewegung bewirkenden Mittel Abstreifer umfasst die die Form von Förderbänder oder -Ketten haben, welche zwischen den Aufnahme-Elementen angeordnet sind (Figur 10).

8. Aufsammelgerät nach Anspruch 1, dadurch gekennzeichnet, dass die eine zusätzliche Relativbewegung bewirkenden Mittel je für sich angetriebene, innerhalb des Rotationskreises drehbar gelagerte Abstreif-Elemente (165, 183) sind, die jeweils vom benachbarten Aufnahme-Element (160 ; 180) angetrieben sind (Figur 15-17).

9. Aufsammelgerät nach Anspruch 1, dadurch gekennzeichnet, dass die eine zusätzliche Relativbewegung bewirkenden Mittel federnd ausgebildete Abstreif-Elemente (81) sind, die im Takt auf und abwärts bewegt werden (Figur 8).

10. Aufsammelgerät nach Anspruch 9, dadurch gekennzeichnet, dass die federnden Abstreifelemente von auf der Nabe (82) der Aufnahme-Elemente angeordneten Zapfen (83) bewegt werden (Figur 8).

11. Aufsammelgerät nach Anspruch 9, dadurch gekennzeichnet, dass die federnden Abstreifelemente mittels eines vom Antrieb der Aufnahmeelemente gesonderten Antrieb bewegt werden.

12. Aufsammelgerät nach Anspruch 6, dadurch gekennzeichnet, dass die Abstreifscheiben (90) jeweils zwischen benachbarten Aufnahme-Elementen (91) eingreifen (Figur 9).

13. Aufsammelgerät nach Anspruch 6, dadurch gekennzeichnet, dass die Abstreifscheiben (32) in eine in den Aufnahme-Elementen (30) angebrachte Nut (31) eingreifen (Figur 3).

14. Aufsammelgerät nach Anspruch 6, dadurch gekennzeichnet, dass die Abstreifscheiben (41) eine Nut aufweisen, in die die Aufnahme-Elemente (40) eingreifen (Figur 4).

## Claims

1. Pick-up implement for vegetable material lying on the ground with pick-up elements in the form of discs of rubber or rubber-elastic material toothed or provided with radial arms on the circumference, which elements nearly contact the ground and rotate about a substantially horizontal axis oriented transversely of the direction of travel and are in operative connection with scraper elements arranged in a delivery region, characterised in that in the delivery region of the rotating pick-up elements there are provided means which in addition to the rotating movement effect a further relative movement between the pick-up elements and the scraper elements.

2. Pick-up implement according to Claim 1, characterised in that the means which effect an additional relative movement are single teeth or tines (50) which are radially displaceable with the drive hub (55) of the pick-up element, are guided by a non-co-rotating control cam (56) and co-operate with a rigid scraper element (A) (Figure 5).

3. Pick-up implement according to Claim 1, characterised in that the means which effect an additional relative movement are single teeth or tines (60) which are pivotably connected through links (64) with the drive hub (64') of the pick-up element, are controlled by means of an eccentric (61) and co-operate with a rigid scraper element (A) (Figure 6).

4. Pick-up implement according to Claim 1, characterised in that the means which effect an additional relative movement are single teeth or tines (150) which are pivotably connected with the hub (151) of the drive wheel, are guided by means of a non-co-rotating control cam (153) and co-operate with a rigid scraper element (A) (Figure 14).

5. Pick-up implement according to Claim 1, characterised in that the means which effect an additional relative movement include a stop (71, 72 ; 141) arranged fixedly beneath a rigid scraper element (A) and in that the pick-up element comprises radial rubber-elastic arms (70 ; 140) which are each bent back by the stop in the rotation of the pick-up element (Figures 7 and 13).

6. Pick-up implement according to Claim 1, characterised in that the means which effect an additional relative movement are rotating scraper discs (18, 32, 41, 90) the axis of rotation of which lies outside the circle of rotation of the pick-up elements (Figures 1-4 and 9).

7. Pick-up implement according to Claim 1, characterised in that the means which effect an additional relative movement include scrapers which have the form of conveyor belts or chains which are arranged between the pick-up elements (Figure 10).

8. Pick-up implement according to Claim 1, characterised in that the means which effect an additional relative movement are scraper elements (165, 183), each individually driven and rotatably mounted within the circle of rotation, which are driven each by the adjacent pick-up element (160 ; 180) (Figures 15-17).

9. Pick-up implement according to Claim 1, characterised in that the means which effect an additional relative movement are resiliently formed scraper elements (81) which are moved upwards and downwards in cadence (Figure 8).

10. Pick-up implement according to Claim 9, characterised in that the resilient scraper elements are moved by journals (83) arranged on the hub (82) of the pick-up elements (Figure 8).

11. Pick-up implement according to Claim 9, characterised in that the resilient scraper elements are moved by means of a drive separate from the drive of the pick-up elements.

12. Pick-up implement according to Claim 6, characterised in that the scraper discs (90) engage in each case between adjacent pick-up elements (91) (Figure 9).

13. Pick-up implement according to Claim 6, characterised in that the scraper discs (32) engage in a groove (31) provided in the pick-up elements (30) (Figure 3).

14. Pick-up implement according to Claim 6, characterised in that the scraper discs (41) comprise a groove in which the pick-up elements (40) engage (Figure 4).

## Revendications

1. Dispositif de ramassage de plantes couchées sur le sol, équipé d'éléments de ramassage effleurant le sol et entraînés en rotation autour d'un axe sensiblement horizontal disposé transversalement par rapport au sens d'avancement, ces éléments ayant la forme de disques en caoutchouc ou en matière élastique pourvus sur la périphérie de dents ou de bras radiaux coopérant avec des éléments racleurs disposés dans une zone de dépose, caractérisé par le fait que dans la zone de dépose des éléments de ramassage rotatifs sont disposés des moyens qui provoquent, en plus du mouvement rotatif, un autre mouvement relatif entre les éléments de ramassage et les éléments racleurs.

2. Dispositif de ramassage selon la revendication 1, caractérisé par le fait que les moyens provoquant un mouvement relatif supplémentaire sont des dents ou des crans séparés (50) qui peuvent être déplacés radialement sur le moyeu d'entraînement (55) de l'élément de ramassage et qui sont commandés par une came fixe (56) et coopèrent avec un élément racleur rigide (A) (Figure 5).

3. Dispositif de ramassage selon la revendication 1, caractérisé par le fait que les moyens provoquant un mouvement relatif supplémentaire, sont des dents ou des crans séparés (60) qui sont reliés de façon mobile par l'intermédiaire de biellettes de guidage (64) au moyeu d'entraînement (64') de l'élément de ramassage, sont commandés au moyen d'un excentrique (61) et coopèrent avec un élément racleur rigide (A) (Figure 6).

4. Dispositif de ramassage selon la revendication 1, caractérisé par le fait que les moyens provoquant un mouvement relatif supplémentaire sont des dents ou des crans séparés (150) qui sont reliés de façon mobile au moyeu (151) d'une roue d'entraînement, sont commandés au moyen d'une came (153) non tournante et coopèrent avec un élément racleur rigide (A) (Figure 14).

5. Dispositif de ramassage selon la revendication 1, caractérisé par le fait que les moyens provoquant un mouvement relatif supplémentaire comportent une butée (71, 72 ; 141) fixée en dessous d'un élément racleur rigide (A) et que l'élément de ramassage est pourvu de bras radiaux (70 ; 140) en matière élastique que la butée courbe chaque fois en arrière durant la rotation de l'élément de ramassage (Figures 7 et 13).

6. Dispositif de ramassage selon la revendication 1, caractérisé par le fait que les moyens provoquant un mouvement relatif supplémentaire sont des disques de raclage rotatifs (18, 32, 41, 90) dont l'axe de rotation est situé en dehors du cercle de rotation des éléments de ramassage (Figures 1-4 et 9).

7. Dispositif de ramassage selon la revendication 1, caractérisé par le fait que les moyens provoquant un mouvement relatif supplémentaire englobent des racleurs qui ont la forme de bandes ou chaînes transporteuses situées entre les éléments de ramassage (Figure 10).

8. Dispositif de ramassage selon la revendication 1, caractérisé par le fait que les moyens provoquant un mouvement relatif supplémentaire sont des éléments racleurs (165, 183) à entraînement indépendant, disposés de manière à pouvoir tourner, à l'intérieur du cercle de rotation, ces éléments racleurs (165 ; 183) étant chacun entraîné par l'élément de ramassage (160 ; 180) voisin (Figures 15-17).

9. Dispositif de ramassage selon la revendication 1, caractérisé par le fait que les moyens provoquant un mouvement relatif supplémentaire sont des éléments racleurs élastiques (81) qui sont relevés et abaissés selon un certain rythme (Figure 8).

10. Dispositif de ramassage selon la revendication 9, caractérisé par le fait que les racleurs élastiques sont mus par des pivots (83) disposés sur le moyeu (82) des éléments de ramassage (Figure 8).

11. Dispositif de ramassage selon la revendication 9, caractérisé par le fait que les éléments racleurs élastiques sont animés par un système d'entraînement distinct de celui des éléments de ramassage.

12. Dispositif de ramassage, selon la revendication 6, caractérisé par le fait que les disques racleurs (90) s'étendent chaque fois entre des éléments de ramassage (91) voisins (Figure 9).

13. Dispositif de ramassage selon la revendication 6, caractérisé par le fait que les disques racleurs (32) s'étendent dans une rainure (31) des éléments de ramassage (30) (Figure 3).

14. Dispositif de ramassage selon la revendication 6, caractérisé par le fait que les disques racleurs (41) sont pourvus d'une rainure dans laquelle s'étendent les éléments de ramassage (40) (Figure 4).

Fig.1

Fig.2

Fig.3

Fig.4

**Fig.5**

A

54

55

56

56

51

52

53

50

**Fig.6**

63

A

60

63

64

62

61

65

64

Fig.7

70
A
71
72
70
73
74

Fig.8

81
A
82
84
83
80

0 116 514

Fig. 9

91

90

Fig. 10

B

4

Fig.11

Fig.12

130

131

132

Fig.13

141

140

A

B

Fig.14

152

150

153

151

A

B

Fig.15

Fig.16

Fig.17